# EUROPEAN PATENT SPECIFICATION

(11) **EP 3 561 558 B1**
(45) Date of publication and mention of the grant of the patent: **27.11.2024**
(21) Application number: 17883201.0
(22) Date of filing: 22.12.2017
(51) Int. Cl.: G02F 1/137, G02F 1/1347, G02F 1/1335, G02B 5/30, G02B 5/22

(54) **VARIABLE REFLECTIVITY MIRROR**
SPIEGEL MIT VARIABLER REFLEKTIVITÄT
MIROIR À RÉFLECTIVITÉ VARIABLE

(30) Priority: 23.12.2016 KR 20160177578
(43) Date of publication of application: 30.10.2019
(73) Proprietor: LG Chem, Ltd., Seoul 07336 (KR)
(72) Inventor: LIM, Eun Jung, Daejeon 34122 (KR); KIM, Jin Hong, Daejeon 34122 (KR); OH, Dong Hyun, Daejeon 34122 (KR); YOU, Jung Sun, Daejeon 34122 (KR); LEE, Hyun Jun, Daejeon 34122 (KR); KIM, Nam Hun, Daejeon 34122 (KR)
(74) Representative: Goddar, Heinz J.
(86) International application number: PCT/KR2017/015309
(87) International publication number: WO 2018/117721

(56) References cited:
- KR-A- 20060 018 773
- KR-A- 20110 040 909
- KR-A- 20160 039 997
- KR-A- 20160 129 350
- KR-B1- 100 646 444
- US-A1- 2004 100 598
- US-A1- 2010 277 786
- US-A1- 2014 340 728
- US-B1- 6 239 778
- US-B1- 6 621 550

## Description

### Technical Field

The present application relates to a reflectance-variable mirror.

### Background Art

The reflectance-variable mirror refers to a mirror manufactured to be capable of adjusting the reflectance of incident light, which can be called a smart mirror. The conventional electrochromic reflectance-variable mirror has a disadvantage in that the response speed is slow, and thus a need for an alternative method is emerging (Patent Document 1: Korean Laid-Open Patent Publication No. 2004-0098051).

A guest host liquid crystal cell, a 1/4 wave plate, and a mirror may be considered as an alternative to the electrochromic reflectance-variable mirror, but there is a problem that the reflectance-variable characteristic is low as compared to the conventional electrochromic reflectance-variable mirror.

US 2010/277786 A1 describes an anisotropic film laminates and methods of fabrication. A film comprises an anisotropic layer and other functional layers. The film having controlled water content is heated under omnidirectional pressure and vacuum to a temperature substantially equal to or above a lower limit of a glass-transition temperature range of the film so as to be laminated to a substrate. The laminate is configured as part of a mirror structure so as to increase contrast of light produced by a light source positioned behind the mirror structure and transmitted through the mirror structure towards a viewer.

US 2004/100598 A1 describes an image display portion that emits image light, reflective polarization selection means that transmits a first linear polarization component emitted from the image display portion and reflects a second linear polarization component, whose polarization axis is orthogonal to that of the first linear polarization component, a transmission polarization axis variable portion capable of selecting between one of a state that changes the polarization axis of incident linearly polarized light and a state that does not change the polarization axis of incident linearly polarized light, and a polarization selection member which, of the incident light, absorbs the first linear polarization component and transmits the second linear polarization component, whose polarization axis is orthogonal to that of the first linear polarization component, are disposed in this order.

US 2014/340728 A1 describes an electronically dimmable optical device, including, in sequence, an active absorbing polarizer; a first static reflective polarizer; an active polarization rotator; and a second static reflective polarizer; configured so that the reflectivity and/or transmissivity of the device can be controlled (increased or decreased) by application of a voltage across the active absorbing polarizer and/or the active polarization rotator. One or more polarization levels can be selected by controlling the voltage at the active absorptive polarizer such that setting the active absorptive polarizer to a selected polarization level determines the brightness of an image produced by the device.

Further relevant background art, which can be regarded as useful for understanding the invention, includes: US 6 621 550 B1 (guest-host liquid crystal display device) and US 6 239 778 B1 (variable light attenuating dichroic dye guest-host device),

### Disclosure

### Technical Problem

It is an object of the present application to provide a reflectance-variable mirror having excellent reflectance-variable characteristics using a liquid crystal cell.

### Technical Solution

The present application relates to a reflectance-variable mirror. The invention is set out in the appended claims. The reflectance-variable mirror comprises a first liquid crystal cell including a guest host liquid crystal layer, a first reflective polarizing film, a second liquid crystal cell including a retardation-variable layer, a second reflective polarizing film and an absorbing plate.

Hereinafter, also, the first liquid crystal cell may be referred to as a guest host liquid crystal cell and the second liquid crystal cell may be referred to as a retardation-variable liquid crystal cell.

In this specification, when any one angle is specified or the term such as vertical, parallel, orthogonal or horizontal while defining an angle, it means a specific angle within a range that does not impair the desired effect, or substantially vertical, parallel, orthogonal or horizontal, which includes, for example, an error that takes a production error or a deviation (variation), and the like, into account. For example, each case of the foregoing may include an error within about ±15 degrees, an error within about ±10 degrees or an error within about ±5 degrees.

The guest host liquid crystal layer comprises liquid crystals and an anisotropic dye. In this specification, the term "guest host liquid crystal layer" may mean a functional layer exhibiting anisotropic light absorption characteristics for an alignment direction of the anisotropic dye and a direction perpendicular to the alignment direction, respectively, by arranging the anisotropic dyes together according to arrangement of liquid crystals. For example, the anisotropic dye is a substance whose absorption rate of light changes according to a polarization direction, which can be referred to as a p-type dye, if the absorption rate of light polarized in the long axis direction is large and can be referred to as a n-type dye, if the absorption rate of light polarized in a short axis direction is large. In one example, when the p-type dye is used, the polarized light vibrating in the long axis direction of the dye can be absorbed and the polarized light vibrating in the direction of the short axis of the dye can be less absorbed and transmitted. Hereafter, unless otherwise specified, the anisotropic dye is assumed to be the p-type dye.

The guest host liquid crystal layer may function as an active polarizer. The term "active polarizer" may mean a functional element capable of controlling anisotropic light absorption according to application of an external action. For example, the arrangement of liquid crystals and anisotropic dyes in the guest host liquid crystal layer can be controlled by application of an external action such as a magnetic field or an electric field, and thus the guest host liquid crystal layer can control anisotropic light absorption according to application of the external action.

The guest host liquid crystal layer switches between a vertically oriented state and a horizontally oriented state depending on whether or not a voltage is applied.

In this specification, the vertically oriented state may mean a state in which directors of liquid crystal molecules are arranged perpendicular to the plane of the liquid crystal layer, and for example, an arranged state to form85 degrees to 90 degrees, 86 degrees to 90 degrees, 87 degrees to 90 degrees and, preferably, 90 degrees, and the horizontally oriented state may mean a state in which directors of liquid crystal molecules are arranged horizontal to the plane of the liquid crystal layer, and for example, an arranged state to form 0 degrees to 5 degrees, 0 degrees to 4 degrees, 0 degrees to 3 degrees, 0 degrees to 2 degrees, 0 degrees to 1 degrees and, preferably, 0 degrees. The term "director of liquid crystal molecule" herein may mean a long axis when the liquid crystal molecule has a rod shape and an axis of a direction normal to a disc plane when the liquid crystal molecule has a discotic shape.

When the guest host liquid crystal layer is in the vertically oriented state, the liquid crystals and the anisotropic dyes exist in the vertically oriented state. When an unpolarized light source passes through the guest host liquid crystal layer in the vertically oriented state, the light source is not given a polarization property. When the guest host liquid crystal layer is in the vertically oriented state, the reflectance-variable mirror realizes a mirror mode.

When the guest host liquid crystal layer is in the horizontally oriented state, the liquid crystals and anisotropic dyes exist in the horizontally oriented state. When an unpolarized light source passes through the guest host liquid crystal layer in the horizontally oriented state, a vibration component parallel to the absorption axis of the anisotropic dye is absorbed and a vibration component orthogonal to the absorption axis of the anisotropic dye is transmitted, so that the light source can be given a polarization property. When the guest host liquid crystal layer is in the horizontally oriented state, the reflectance-variable mirror realizes an antireflection mode.

The guest host liquid crystal layer exists in a vertically oriented state in a state of no voltage application. The guest host liquid crystal layer exists in a horizontally oriented state when a voltage is applied. Such a oriented state is suitable when the first liquid crystal cell is implemented as a VA mode guest host liquid crystal cell.

The type and physical properties of the liquid crystal can be appropriately selected in consideration of a driving mode of the first liquid crystal cell.

In one example, the liquid crystal of the guest host liquid crystal layer may be a nematic liquid crystal or a smectic liquid crystal. The nematic liquid crystals may mean liquid crystals in which rod-shaped liquid crystal molecules have no regularity for a location but are arranged parallel to the long axis direction of the liquid crystal molecules, and the smectic liquid crystals may mean liquid crystals in which rod-shaped liquid crystal molecules are regularly arranged to form a layered structure and are arranged in parallel with regularity in the long axis direction.

The liquid crystals of the guest host liquid crystal layer may have a positive or negative dielectric anisotropy. In this specification, the term "dielectric anisotropy (Δε)" may mean a difference (ε// - ε⊥) between the horizontal permittivity (ε//) and the vertical permittivity (ε⊥) of the liquid crystal. The term "horizontal permittivity (ε//)" herein means a value of permittivity measured along a direction of an electric field in a state where a voltage is applied so that directors of liquid crystal molecules are substantially horizontal to the direction of the electric field due to the applied voltage, and the "vertical permittivity (ε⊥)" means a value of permittivity measured along a direction of an electric field in a state where a voltage is applied so that directors of liquid crystal molecules are substantially vertical to the direction of the electric field due to the applied voltage.

In one example, when the guest host liquid crystal layer is driven in an ECB mode, liquid crystals having a positive dielectric anisotropy may be used. As another example, when the guest host liquid crystal layer is driven in a VA mode, liquid crystals having a negative dielectric anisotropy may be used.

In one example, the liquid crystal of the guest host liquid crystal layer may have a dielectric anisotropy of -20 to 20. When the dielectric anisotropy of the liquid crystal in the guest host liquid crystal layer satisfies the above range, it may be advantageous to realize a reflectance-variable mirror having a high response speed and excellent reflectance-variable characteristics.

In this specification, the term "dye" may mean a material capable of intensively absorbing and/or modifying light in at least some or all range within a visible light region, for example, a wavelength range of 400 nm to 700 nm, and the term "anisotropic dye" may mean a material capable of anisotropically absorbing light in at least some or all range of the visible light region.

As the anisotropic dye, for example, known dyes noted to have properties that can be aligned according to the alignment state of the liquid crystals can be selected and used. As the anisotropic dye, for example, a black dye can be used. Such a dye is known, for example, as azo dyes or anthraquinone dyes, but is not limited thereto.

The dichroic ratio of the anisotropic dye can be, for example, 5 or more, 6 or more, or 7 or more. The term "dichroic ratio" herein may mean, for example, a value obtained by dividing absorption of the polarized light parallel to the long axis direction of the dye by absorption of the polarized light parallel to the direction perpendicular to the long axis direction. The anisotropic dye can satisfy the dichroic ratio in at least some wavelengths or any one wavelength within the wavelength range of the visible light region, for example, within the wavelength range of about 380 nm to 700 nm or about 400 nm to 700 nm. The upper limit of the dichroic ratio may be, for example, 20 or less, 18 or less, 16 or less, or 14 or less or so. If the dichroic ratio of the anisotropic dye satisfies the above range, it may be advantageous to realize a reflectance-variable mirror having excellent reflectance-variable characteristics.

The content of the anisotropic dye in the guest host liquid crystal layer can be suitably selected in consideration of the object of the present application. For example, the content of the anisotropic dye in the guest host liquid crystal layer may be 0.1 wt% or more, 0.25 wt% or more, 0.5 wt% or more, 0.75 wt% or more, 1 wt% or more, 1.25 wt% or more, or 1.5 wt%. The upper limit of the content of the anisotropic dye in the guest host liquid crystal layer is 1.5 wt% or less. When the content of the anisotropic dye in the guest host liquid crystal layer satisfies the above range, it may be advantageous to realize a reflectance-variable mirror having excellent reflectance-variable characteristics.

The thickness of the guest host liquid crystal layer can be appropriately selected in consideration of the object of the present application. The guest host liquid crystal layer may have a thickness of, for example, about 3 µm to 20 µm or 3 µm to 15 µm. When the thickness of the guest host liquid crystal layer satisfies the above range, it may be advantageous to provide a mirror element having excellent reflectance-variable characteristics.

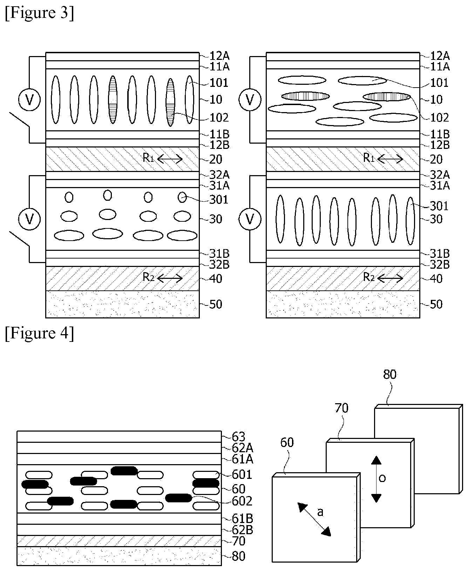

Figure 3 exemplarily shows the structure of the reflectance-variable mirror of the present application.

As shown in Figure 3, the first liquid crystal cell may further comprise an alignment film. The alignment film may be disposed to be adjacent to the guest host liquid crystal layer. In one example, the first liquid crystal cell may comprise two alignment films (hereinafter, referred to as first and second alignment films (11A and 11B in Figure 3)) disposed opposite to both sides of the guest host liquid crystal layer.

The first and second alignment films may have an orientation force capable of controlling the alignment of the initial state of liquid crystals and anisotropic dyes. In this specification, the initial state may mean a state in which an external voltage is not applied thereto.

The oriented state of the guest host liquid crystal layer or the retardation-variable liquid crystal layer can be controlled by a pretilt of the alignment film. In this specification, the pretilt may have an angle and a direction. The pretilt angle may be referred to as a polar angle, and the pretilt direction may also be referred to as an azimuthal angle.

The pretilt angle may mean an angle formed by the optical axis of the liquid crystal molecules with respect to the plane horizontal to the alignment film. The pretilt direction may mean a direction in which the optical axis of the liquid crystal molecules is projected on the horizontal plane of the alignment film.

The first and second alignment films may be each a horizontal alignment film or a vertical alignment film. In one example, the first and second alignment films may be each a vertical alignment film. In this case, the directors of the liquid crystal molecules can be arranged perpendicular to the vertical alignment film plane. In another example, the first and second alignment films may be each a horizontal alignment film. In this case, which is not in accordance with the invention as claimed, the directors of the liquid crystal molecules can be arranged horizontal to the alignment film plane.

As the first and second alignment films, it is possible to appropriately select and use an alignment film known in the art, which has an orientation force for liquid crystal molecules. As the alignment film, for example, a contact type alignment film, such as a rubbing alignment film, or a photo-alignment film which can exhibit orientation characteristics by a non-contact method such as irradiation of a linearly polarized light by comprising a photo-alignment film compound, can be used.

As shown in Figure 3, the first liquid crystal cell may further comprise a transparent electrode substrate. The transparent electrode substrate may comprise a base layer and a transparent electrode layer on the base layer. The electrode layer can apply an appropriate electric field to the guest host liquid crystal layer so that the alignment state of the liquid crystals and the anisotropic dyes can be switched. In one example, the first liquid crystal cell may comprise two transparent electrode substrates (hereinafter, referred to as first and second transparent electrode substrates (12A and 12B in Figure 3)) disposed opposite to both sides of the guest host liquid crystal layer. When the first liquid crystal cell comprises the first and second alignment films, the first and second transparent electrode substrates may be disposed adjacent to opposite sides of the guest host liquid crystal layer of the first and second alignment films, respectively.

As the electrode layer, a transparent electrode layer can be used. As the transparent electrode layer, for example, those formed by depositing a conductive polymer, a conductive metal, a conductive nanowire or a metal oxide such as ITO (indium tin oxide), and the like can be used. Besides, various materials capable of forming the transparent electrode and methods for forming the same are known, which can be applied without limitation.

As the base layer, a transparent base layer can be used. For example, as the base layer, an inorganic film such as a glass substrate, a crystalline or amorphous silicon film, a quartz film or an ITO (indium tin oxide) film, or a plastic film can be used. As the base layer, an optically isotropic base layer or an optically anisotropic base layer such as a retardation layer may be used.

A specific example of the plastic film may be exemplified by a film comprising TAC (triacetyl cellulose); COP (cyclo olefin copolymer) such as norbomene derivatives; PMMA (poly(methyl methacrylate)); PC (polycarbonate); PE (polyethylene); PP (polypropylene); PVA (polyvinyl alcohol); DAC (diacetyl cellulose); Pac (polyacrylate); PES (polyether sulfone); PEEK (polyetheretherketon); PPS (polyphenylsulfone), PEI (polyetherimide); PEN (polyethylenenaphthatlate); PET (polyethyleneterephtalate); PI (polyimide); PSF (polysulfone); PAR (polyarylate) or an amorphous fluororesin or the like, but is not limited thereto.

In this specification, the reflective polarizing film may have selective transmission and reflection characteristics with respect to incident light. For example, the reflective polarizing film may have a property of transmitting one component of transverse wave and longitudinal wave components of light and reflecting the other component. When light is incident on the reflective polarizing film, light transmitted through the reflective polarizing film and light reflected from the reflective polarizing film may have polarization characteristics. In one example, the polarization direction of the transmitted light and the polarization direction of the reflected light may be orthogonal to each other. That is, the reflective polarizing film may have a transmission axis and a reflection axis, orthogonal to the plane direction. Since the reflective polarizing film has a property of transmitting most of one component of the transverse wave and longitudinal wave components of light and reflecting most of the other component, it can be realized as a half-mirror form. As the reflective polarizing film, for example, DBEF (dual brightness enhancement film) may be used. The matters concerning the reflective polarizing film may be applied to the first and second reflective polarizing films to be described below.

The first reflective polarizing film is disposed below the first liquid crystal layer. The first reflective polarizing film has a first reflection axis formed in one direction. The first reflection axis may be parallel to the absorption axis direction of the anisotropic dye upon horizontal orientation of the guest host liquid crystal layer. The first reflective polarizing film may have a first transmission axis orthogonal to the first reflection axis. The first reflection axis and the first transmission axis may be formed in a horizontal direction (plane direction).

The second liquid crystal cell is disposed below the first reflective polarizing film. The second liquid crystal cell comprises a retardation-variable liquid crystal layer switching between a phase difference mode and a non-phase difference mode. The retardation-variable liquid crystal layer comprises liquid crystals. The type and physical properties of the liquid crystal can be appropriately selected in consideration of the driving mode of the second liquid crystal cell.

The retardation-variable liquid crystal layer switches between a phase difference mode and a non-phase difference mode depending on whether or not a voltage is applied.

When the retardation-variable liquid crystal layer is a phase difference mode, it may have a phase delay characteristic with respect to incident light. The retardation-variable liquid crystal layer may have a phase delay characteristic that the vibration direction of the linearly polarized light incident in the phase difference mode is rotated by 80 to 100 degrees, 82 to 98 degrees, 84 to 96 degrees, 86 to 94 degrees 88 to 92 degrees and, preferably, 90 degrees. When the retardation-variable liquid crystal layer is the phase difference mode, the reflectance-variable mirror realizes a mirror mode.

When the retardation-variable liquid crystal layer is a non-phase difference mode, the mode may mean a mode having no phase delay characteristic with respect to incident light. The retardation-variable liquid crystal layer does not change the vibration direction of the linearly polarized light incident in the non-phase difference mode. When the retardation-variable liquid crystal layer is the phase difference mode, the reflectance-variable mirror realizes an antireflection mode.

The retardation-variable liquid crystal layer realizes a phase difference mode in a state of no voltage application, and realizes a non-phase difference mode in a state of voltage application. Such an oriented state may be suitable when the second liquid crystal cell is implemented by a 90 degree TN liquid crystal cell.

The second liquid crystal cell is driven in an appropriate mode so as to switch between the phase difference mode and the non-phase difference mode. The second liquid crystal cell may be implemented in a liquid crystal-based mode in which the retardation-variable characteristic has the same function as the 1/2 wave plate, or in the liquid crystal-based mode having the above function and a laminated element of a compensating film. In one example, the second liquid crystal cell may be a 90 degree TN mode liquid crystal cell, a 270 degree STN mode liquid crystal cell, an ECB mode liquid crystal cell, or a laminate of a 1/2 wave plate and a VA mode liquid crystal cell.

In the TN (twisted nematic) mode liquid crystal cell, the liquid crystal molecules in the liquid crystal layer may exist in a twist orientation state at a twist angle of 90 degrees or less in a state of no voltage application, and may exist in a vertically oriented state in a state of voltage application. The 90 degree TN liquid crystal cell may mean a TN liquid crystal cell having a twist angle of 90 degrees.

In the STN (super twisted nematic) mode liquid crystal cell, the liquid crystal molecules in the liquid crystal layer may exist in a twist orientation state at a twist angle of more than 90 degrees in a state of no voltage application, and may exist in a vertically oriented state in a state of voltage application. The 270 degree STN liquid crystal cell may mean an STN liquid crystal cell having a twist angle of 270 degrees.

In the ECB (electrically controllable birefringence) mode liquid crystal cell, the liquid crystal molecules in the liquid crystal layer may exist in a horizontally oriented state in a state of no voltage application, and may exist in a vertically oriented state in a state of voltage application.

In the VA (vertical alignment) mode liquid crystal cell, the liquid crystal molecules in the liquid crystal layer may exist in a vertically oriented state in a state of no voltage application, and may exist in a horizontally oriented state in a state of voltage application.

The twist angle means an angle formed by the optical axis of the liquid crystal molecules existing at the lowermost of the twist orientation liquid crystal layer and the optical axis of the liquid crystal molecules existing at the uppermost. The application of the voltage may be applied in a direction perpendicular to the surfaces of the third and fourth transparent electrode substrates.

The thickness of the retardation-variable liquid crystal layer can be suitably selected in consideration of the object of the present application. The retardation-variable liquid crystal layer may have a thickness of, for example, about 3 µm to 20 µm or 3 µm to 15 µm. When the thickness of the retardation-variable liquid crystal layer satisfies the above range, it may be advantageous to provide a mirror element having excellent reflectance-variable characteristics.

The second liquid crystal cell may further comprise an alignment film. In one example, the second liquid crystal cell may further comprise third and fourth alignment films (31A and 31B in Figure 3) disposed opposite to both sides of the retardation-variable liquid crystal layer. To the third and fourth alignment films, the contents described in the items of the first and second alignment films may be applied equally and the alignment film suitable for the driving mode of the second liquid crystal cell may be applied.

In one example, when the second liquid crystal cell is a 90 degree TN liquid crystal cell or a 270 degree STN liquid crystal cell, the pretilt direction of the third alignment film disposed closer to the first reflective polarizing film among the third and fourth alignment films may be orthogonal to the reflection axis of the first reflective polarizing film and the pretilt direction of the fourth alignment film may be parallel to the reflection axis of the first reflective polarizing film.

In another example, when the second liquid crystal cell is an ECB mode liquid crystal cell, the pretilt direction of the third and fourth alignment films may form about 45 degrees with the reflection axis of the first reflective polarizing film.

In another example, when the second liquid crystal cell is a laminate of a 1/2 wave plate and a VA mode liquid crystal cell, the slow axis of the 1/2 wave plate and the reflection axis of the first reflective polarizing film may form about 45 degrees, and the slow axis of the 1/2 wave plate and the direction of the horizontal orientation of the VA mode liquid crystal cell (the pretilt direction of the alignment film of the VA mode liquid crystal cell) may form about 45 degrees. In this case, which is in accordance with the invention as claimed, the mirror mode is implemented in a state where no voltage is applied to the VA liquid crystal cell, and the antireflection mode is implemented in a state of voltage application.

The second liquid crystal cell may further comprise a transparent electrode substrate. In one example, the second liquid crystal cell may further comprise third and fourth transparent electrode substrates(32A and 32B in Figure 3) on both sides of the retardation-variable liquid crystal layer. To the third and fourth transparent electrode base materials, the contents described in the items of the first and second transparent electrode substrates can be applied equally and the transparent electrode substrate suitable for the driving mode of the second liquid crystal cell can be applied.

The second reflective polarizing film is disposed below the second liquid crystal cell. The second reflective polarizing film may have a second reflection axis formed in a direction parallel to the first reflection axis. The second reflective polarizing film may have a second transmission axis orthogonal to the second reflection axis. The second reflection axis and the second transmission axis may be formed in a horizontal direction (plane direction). The second reflection axis may be parallel to a vibration direction of linearly polarized light passed through the phase difference mode of the retardation-variable liquid crystal layer in the phase difference mode of the second liquid crystal cell.

The absorbing plate may be disposed below the second reflective polarizing film. The absorbing plate may serve to absorb afterglow transmitted through the first liquid crystal cell, the first reflective polarizing film, the second liquid crystal cell and the second reflective polarizing film, and to extinguish the afterglow. The absorbing plate may comprise a known light absorbing material. The light absorbing material may include, for example, an ink comprising a black inorganic pigment such as a carbon black ink, graphite or iron oxide, or a black organic pigment ink such as an azo-based pigment or a phthalocyanine-based pigment.

The absorbing plate may have a light absorptivity of about 90% or more, 95% or more, or 98% or more. The light absorptivity means a light absorptivity for light in a visible light region, that is, a wavelength of about 380 nm to 780 nm. The light absorptivity may mean a light absorptivity at any one wavelength of the 380 nm to 780 nm wavelength band or a predetermined wavelength band, or may mean a light absorptivity at all wavelengths of the wavelength band, or may mean an average light absorptivity at the wavelength band.

The reflectance-variable mirror switches between a mirror mode and an antireflection mode depending on whether or not a voltage is applied. In this specification, the mirror mode may mean a mode in which the front light reflectance is about 50% or more, and the antireflection mode may mean a mode in which the front light transmittance is about 10% or less.

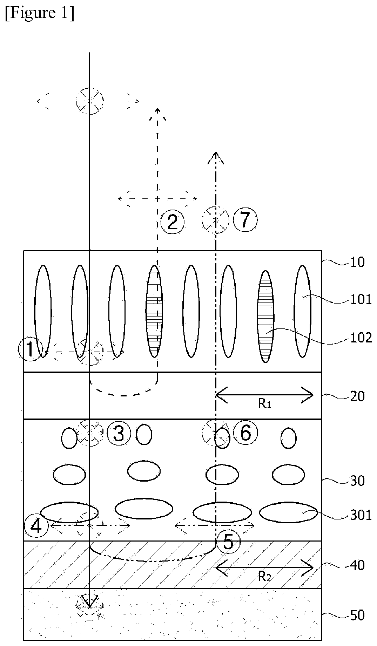

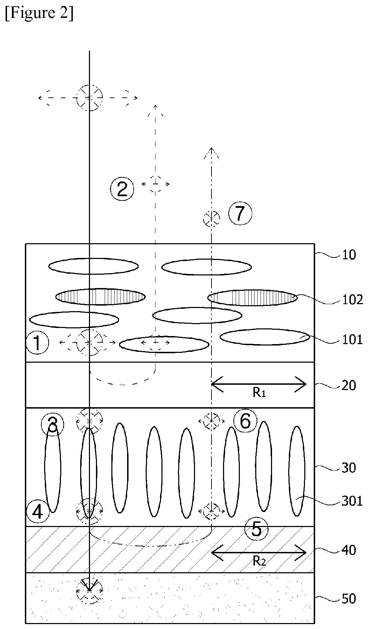

Figures 1 and 2 illustrate the principle of implementing a mirror mode and an antireflection mode of a reflectance-variable mirror, in which a first liquid crystal cell is a VA mode guest host liquid crystal cell and a second liquid crystal cell is a 90 degree TN mode liquid crystal cell, respectively. As illustrated in Figure 1 and 2, the reflectance-variable mirror comprises a guest host liquid crystal layer (10) containing liquid crystals (101) and anisotropic dyes (102), a first reflective polarizing film (20) having a first reflection axis (R₁), a retardation-variable liquid crystal layer (30) containing liquid crystals (301), a second reflective polarizing film (40) having a second reflection axis (R₂) and an absorbing plate (50) sequentially.

In Figures 1 and 2, the solid line - means unpolarized light, the broken line - - means a 0 degree vibration component, and the broken line - - - means a 90 degree vibration component.

The exemplary reflectance-variable mirror realizes a mirror mode in a state of no voltage application to each of the first liquid crystal cell and the second liquid crystal cell. Hereinafter, the optical path upon the mirror mode implementation of Figure 1 will be illustratively described. The reflection axes of the first and second reflective polarizing films are assumed to be 0 degrees, respectively.

(1) The VA mode guest host liquid crystal cell exists in a vertically oriented state in a state of no voltage application. The unpolarized light source incident on the vertically oriented guest host liquid crystal layer is partially absorbed by the guest host liquid crystal layer and maintains the unpolarized state while passing through the guest host liquid crystal layer. (2) Among the light transmitted through the guest host liquid crystal layer, the 0 degree oscillating light source oscillating in parallel with the first reflection axis 0 degrees of the first reflective polarizing film is reflected by the first reflective polarizing film and is output through the guest host liquid crystal layer. (3) Among the light passing through the guest host liquid crystal layer, the 90 degree oscillating light source orthogonal to the first reflection axis of the first reflective polarizing film and some 0 degree oscillating light source transmit the first reflective polarizing film. (4) The light transmitted through the first reflective polarizing film passes through the retardation-variable liquid crystal layer of the TN mode liquid crystal cell and is retarded by 90 degrees. That is, the 90 degree oscillating light source changes into the 0 degree oscillating light source component through the retardation-variable liquid crystal layer. (5) The 0 degree oscillating light source from (4) above is a light source component parallel to the second reflection axis of the second reflective polarizing film, and thus is reflected. (6) Like the effect generated in (4) above, the 0 degree oscillating light source reflected in (5) above passes through the retardation-variable liquid crystal cell and is changed into a 90 degree oscillating light source by being retarded by 90 degrees. (7) Since the transmission axis of the first reflective polarizing film is 90 degrees, all the 90 degree oscillating light sources expressed in (6) above, transmit the first reflective polarizing film. Therefore, most of the 0 degree and 90 degree polarization components of the incident light source can be extracted as the reflected light source.

The exemplary reflectance-variable mirror realizes an antireflection mode in a state of voltage application to each of the first liquid crystal cell and the second liquid crystal cell. Hereinafter, the optical path upon the antireflection mode implementation of Figure 2 will be illustratively described. The reflection axes of the first and second reflective polarizing films are assumed to be 0 degrees, respectively.

(1) The VA mode guest host liquid crystal cell exists in the horizontally oriented state in a state of voltage application. The absorption axis of the anisotropic dye upon the horizontal orientation is assumed to be 0 degrees. While the non-polarized light source incident on the vertically oriented guest host liquid crystal layer passes through the horizontally oriented guest host liquid crystal layer where the absorption axis of the anisotropic dye is 0 degrees, the 0 degree oscillating component is absorbed and the polarized light of the 90 degree oscillating component is generated. (2) Among the partially polarized light sources passing through the guest host liquid crystal layer, the 0 degree oscillating light source component oscillating in parallel with the first reflection axis 0 degrees of the first reflective polarizing film is reflected and output by generating a further absorbed light while passing through the guest host liquid crystal layer. (3) Among the partially polarized light sources passing through the guest host liquid crystal layer, the 90 degree oscillating light source orthogonal to the first reflection axis of the first reflective polarizing film and some 0 degree oscillating light source transmit the first reflective polarizing film. (4) The TN mode liquid crystal cell exists in a vertically oriented state in a state of voltage application. Therefore, since the retardation-variable liquid crystal layer has no phase difference characteristic, the light transmitted through the first reflective polarizing film passes through the retardation-variable liquid crystal layer as it is. That is, the 90 degree oscillating light source is maintained as a 90 degree oscillating light source component. (5) The 90 degree oscillating light source in (4) above is a light source component parallel to the second transmission axis of the second reflective polarizing film, and thus is transmitted as it is to be absorbed and extinguished on the absorbing plate. (6) The 0 degree and 90 degree oscillating light sources partially reflected in (5) above pass through the retardation-variable liquid crystal layer as they are. (7) Since the transmission axis of the first reflective polarizing film is 90 degrees, the 90 degree oscillating light source of the remaining light sources in (6) above is absorbed by short axis absorption of the guest host liquid crystal layer, and the 90 degree oscillating light source is additionally reflected and partially output in the first reflective polarizing film, but since it is parallel to the absorption axis of the long axis of the guest host liquid crystal layer, it is additionally absorbed. Therefore, it is possible to prevent reflection of 0 degree and 90 degree polarization components of the incident light source.

The reflectance-variable mirror of the present application realizes a reflectance of 10% or less in the antireflection mode according to the principle of implementation of the mirror mode and the antireflection mode. Accordingly, the reflectance-variable mirror can have excellent reflectance-variable characteristics. The reflectance difference between the mirror mode and the antireflection mode of the reflectance-variable mirror is 50% or more. In addition, since the reflectance-variable mirror of the present application is based on a liquid crystal cell, there is an advantage that the response speed is high.

The reflectance-variable mirror of the present application can be applied to various optical elements requiring application of a reflectance-variable mirror. As long as it comprises the reflectance-variable mirror, other components, structures and the like are not particularly limited, and all contents well known in this field can be appropriately applied. However, the reflectance-variable mirror of the present application comprises no image display panel. That is, the reflectance-variable mirror of the present application is not an image display device.

### Advantageous Effects

The reflectance-variable mirror of the present application can realize excellent reflectance-variable characteristics by lowering the reflectance in an antireflection mode.

### Brief Description of Drawings

Figure 1 illustrates the principle of implementing a mirror mode of a reflectance-variable mirror of the present application.
Figure 2 illustrates the principle of implementing an antireflection mode of a reflectance-variable mirror of the present application.
Figure 3 exemplarily shows a reflectance-variable mirror of Example 1.
Figure 4 exemplarily shows a reflectance-variable mirror of Comparative Example 1. Figure

### [Explanation of Reference Numerals and Symbols]

10: guest host liquid crystal layer 101: liquid crystal 102: anisotropic dye 11A and 11B: first and second alignment films 12A and 12B: first and second transparent electrode substrates, 20: first reflective polarizing film 30: retardation-variable liquid crystal layer 301: liquid crystal 31A and 31B: third and fourth alignment films, 32A and 32B: third and fourth transparent electrode substrates40: second reflective polarizing film 50: absorbing plate 60: guest host liquid crystal layer 601: liquid crystal 602: anisotropic dye 61A, 61B: alignment films 62A, 62B: transparent electrode layers 63: base layer 70: 1/4 wave plate 80: mirror R₁: reflection axis of first reflective polarizing film R₂: reflection axis of second reflective polarizing film a: absorption axis of guest host liquid crystal layer (60) o: optical axis of 1/4 wave plate (70)

### Mode for Invention

Hereinafter, the reflectance-variable mirror of the present application will be described in detail by way of examples, but the scope of the present application is not limited by the following contents.

### Production Example 1 Production of VA mode GHLC cell

Two cell substrates, in which an ITO electrode layer and a vertical alignment film were sequentially formed on a polycarbonate film (width x length = 15 cm x 5 cm), were spaced apart so that the vertical alignment films faced each other and a cell gap was 8 µm, and the VA mode GHLC cell was produced by injecting a liquid crystal composition therein and sealing the edge. The liquid crystal composition comprises nematic liquid crystals (HNG7306 from HCCH, dielectric anisotropy: -5.0) and anisotropic dyes (X12 from BASF), where the anisotropic dye has a content of 1.4 wt%.

### Production Example 2 Production of VA mode GHLC cell

Two cell substrates, in which an ITO electrode layer and a vertical alignment film were sequentially formed on a polycarbonate film (width x length = 15 cm x 5 cm), were spaced apart so that the vertical alignment films faced each other and a cell gap was 8 µm, and the VA mode GHLC cell was produced by injecting a liquid crystal composition therein and sealing the edge. The liquid crystal composition comprises nematic liquid crystals (HNG7306 from HCCH, dielectric anisotropy: -5.0) and anisotropic dyes (X12 from BASF), where the anisotropic dye has a content of 1.0 wt%.

### Production Example 3. Production of ECB mode GHLC cell

Two cell substrates, in which an ITO electrode layer and a horizontal alignment film were sequentially formed on a glass (width x length = 15 cm x 5 cm), were spaced apart so that the orientation directions of the facing horizontal alignment films were parallel and a cell gap was 11 µm, and then the ECB mode GHLC cell was produced by injecting a liquid crystal composition therein and sealing the edge. The liquid crystal composition comprises nematic liquid crystals (HPC2160 from HCCH, dielectric anisotropy: 18.2) and anisotropic dyes (X12 from BASF), where the anisotropic dye has a content of 1.5 wt%.

### Production Example 4 Production of VA mode GHLC cell

Two cell substrates, in which an ITO electrode layer and a vertical alignment film were sequentially formed on a polycarbonate film (width x length = 15 cm x 5 cm), were spaced apart so that the vertical alignment films faced each other and a cell gap was 12 µm, and the VA mode GHLC cell was produced by injecting a liquid crystal composition therein and sealing the edge. The liquid crystal composition comprises nematic liquid crystals (HNG7306 from HCCH, dielectric anisotropy: -5.0) and anisotropic dyes (X12 from BASF), where the anisotropic dye has a content of 1.4 wt%.

### Production Example 5 Production of TN Mode Liquid Crystal Cell

Two cell substrates, in which an ITO electrode layer and a horizontal alignment film were sequentially formed on a polycarbonate film (width x length = 15 cm x 5 cm), were spaced apart so that the orientation directions of the facing horizontal alignment films were orthogonal and a cell gap was 7 µm, and a 90 degree TN mode GHLC cell was produced by injecting a liquid crystal composition therein and sealing the edge. The liquid crystal composition comprises nematic liquid crystals (MAT-16-970 from Merck, dielectric anisotropy: 5.0) and a chiral agent (S811, HCC), where the chiral agent has a content of 0.08 wt%. The cell gap x Δn (refractive index anisotropy of liquid crystal) value of the produced TN mode liquid crystal cell is about 480 nm.

### Example 1

Each DBEF (dual brightness enhancement film, 3M) having a reflectance of 52% for unpolarized incident light was prepared as first and second reflective polarizing films. A black sheet (LG Chem) having an absorptivity of 98% or more was prepared as an absorbing plate.

The VA mode GHLC cell (10) of Production Example 1, the first reflective polarizing film (20), the TN mode liquid crystal cell (30) of Production Example 5, the second reflective polarizing film (40) and the light-absorbing plate (50) were sequentially laminated as in Figure 3 to manufacture a reflectance-variable mirror. The reflection axis (R₁) of the first reflective polarizing film and the reflection axis (R₂) of the second reflective polarizing film were disposed so as to be parallel to each other. The reflection axis of the first reflective polarizing film was disposed to be parallel to the absorption axis direction upon horizontal orientation of the GHLC cell and the reflection axis of the second reflective polarizing film was disposed to be orthogonal to the orientation direction of the side of the second reflective polarizing film of the TN mode liquid crystal cell.

### Example 2

A reflectance-variable mirror was manufactured in the same manner as in Example 1, except that the VA mode GHLC cell of Production Example 2 was used instead of the VA mode GHLC cell of Production Example 1.

### Comparative Example 1

The ECB mode GHLC cell (60) of Production Example 3, a 1/4 wave plate (70) and a commercial mirror (80) having a reflectance of 90% were sequentially laminated as in Figure 4 to manufacture a reflectance-variable mirror. The absorption axis (a) upon horizontal orientation of the GHLC cell and the optical axis (o) of the 1/4 wave plate were disposed to form about 45 degrees.

### Comparative Example 2

A reflectance-variable mirror was manufactured in the same manner as in Comparative Example 1, except that the VA mode GHLC cell of Production Example 4 was used instead of the ECB mode GHLC cell of Production Example 3.

### Comparative Example 3

In Example 2, a reflectance-variable mirror was manufactured with a structure except for the first liquid crystal cell.

### Evaluation Example 1. Evaluation of reflectance-variable characteristics

For the GHLC cells used in manufacturing the reflectance-variable mirrors of Examples 1 to 2 and Comparative Examples 1 to 3, each transmittance depending on the presence or absence of voltage application was measured and described in Table 1 below. For the reflectance-variable mirrors of Examples 1 and 2 and Comparative Examples 1 to 3, each reflectance was measured depending on the presence or absence of voltage application and described in Table 1 below.

The transmittance is a back light transmittance, and the reflectance is a front light reflectance. The front light is light entering the reflectance-variable mirror from the viewer side, the back light is light entering the reflectance-variable mirror from the opposite side of the viewer side, and the back light transmittance and the front light reflectance are values measured at the viewer side.

In Examples 1 to 2 and Comparative Examples 1 to 3, the viewer side is the GHLC cell side. The reflectance is a value measured with respect to light having a wavelength of 380 nm to 780 nm by an SCI (specular component included) method using CM-2600d from KONICA MINOLTA. The front light reflectance in Table 2 is a numerical value when each front light incident light quantity is set to 100%.

**[Table 1]**

| | GHLC Cell single item characteristic | |
|---|---|---|
| | 0V Transmittance (%) | 15V Transmittance (%) |
| Production Example 1 | 71.5 | 41 |
| Production Example 2 | 77 | 46 |
| Production Example 3 | 35 | 58.6 |
| Production Example 4 | 59 | 33 |

**[Table 2]**

| | Reflectance-variable mirror characteristic | | |
|---|---|---|---|
| | 0V Reflectance (%) | 15V Reflectance (%) | Reflectance difference (%) |
| Example 1 | 57.7 | 3.5 | 54.2 |
| Example 2 | 68 | 9 | 59 |
| Comparative Example 1 | 16 | 55 | 39 |
| Comparative Example 2 | 55 | 12.5 | 42.5 |
| Comparative Example 3 | 91% | 51% | 40 |

## Claims

1. A reflectance-variable mirror comprising, in the following order:
a first liquid crystal cell having a guest host liquid crystal layer (10) including liquid crystals (101) and anisotropic dyes (102),
a first reflective polarizing film (20) having a first reflection axis (R1) formed in one direction,
a second liquid crystal cell having a retardation-variable liquid crystal layer (30) switching between a phase difference mode, in which a vibration direction of linearly polarized light is rotated by 90 degrees, and a non-phase difference mode,
a second reflective polarizing film (40) having a second reflection axis (R2) parallel to the first reflection axis (R1); and
an absorbing plate (50) having a light absorptivity of about 90% or more in a wavelength range of 380 nm to 780 nm,
wherein the reflectance-variable mirror comprises no image display panel,
wherein the reflectance-variable mirror switches between mirror mode and an antireflection mode, in which the light reflectance is 10% or less, depending on whether or not a voltage is applied,
wherein the reflectance-variable mirror realizes the mirror mode when the first liquid crystal cell is in a vertically oriented state and the second liquid crystal cell is in the phase difference mode in a state of no voltage application to each of the first liquid crystal cell and the second liquid crystal cell,
wherein the reflectance-variable mirror realizes the antireflection mode when the first liquid crystal cell is in a horizontally oriented state and the second liquid crystal cell is in the non-phase difference mode in a state of voltage application to each of the first liquid crystal cell and the second liquid crystal cell,
wherein a content of the anisotropic dye (102) in the guest host liquid crystal layer (10) is 0.1 wt.% or more and 1.5 wt.% or less,
wherein a reflectance difference between the mirror mode and the antireflection mode of the reflectance-variable mirror is 50% or more.

2. The reflectance-variable mirror according to claim 1,
wherein the first liquid crystal cell further comprises first and second alignment films (11A, 11B) disposed opposite to both sides of the guest host liquid crystal layer.

3. The reflectance-variable mirror according to claim 1,
wherein the first liquid crystal cell further comprises first and second transparent electrode substrates (12A, 12B) disposed opposite to both sides of the guest host liquid crystal layer (10).

4. The reflectance-variable mirror according to claim 1,
wherein the first reflective polarizing film (20) has a first transmission axis orthogonal to the first reflection axis (R1), and the first reflection axis (R1) and the first transmission axis are formed in a plane direction.

5. The reflectance-variable mirror according to claim 1,
wherein the first reflection axis (R1) of the first reflective polarizing film (20) is parallel to an absorption axis direction of the anisotropic dyes in the antireflection mode, with the guest host liquid crystal layer (10) being in a horizontal orientation.

6. The reflectance-variable mirror according to claim 1,
wherein the second liquid crystal cell further comprises third and fourth alignment films (31A, 31B) disposed opposite to both sides of the retardation-variable liquid crystal layer (30).

7. The reflectance-variable mirror according to claim 1,
wherein the second liquid crystal cell further comprises third and fourth transparent electrode substrates (32A, 32B) disposed opposite to both sides of the retardation-variable liquid crystal layer (30).

8. The reflectance-variable mirror according to claim 1,
wherein the second liquid crystal cell is a 90 degree TN mode liquid crystal cell, a 270 degree STN mode liquid crystal cell, an ECB mode liquid crystal cell, or a laminate of a 1/2 wave plate and a VA mode liquid crystal cell.

9. The reflectance-variable mirror according to claim 1,
wherein the second reflective polarizing film (40) has a second transmission axis orthogonal to the second reflection axis (R2), and the second reflection axis (R2) and the second transmission axis are formed in a plane direction.

10. The reflectance-variable mirror according to claim 1,
wherein, in the mirror mode, the second reflection axis (R2) of the second reflective polarizing film (40) is parallel to the vibration direction of the linearly polarized light after passing through the retardation-variable liquid crystal layer (30) in the phase difference mode.

## Patentansprüche

1. Reflexionsvariabler Spiegel aufweisend, in der folgenden Reihenfolge:
eine erste Flüssigkristallzelle mit einer Gast-Host-Flüssigkristallschicht (10), die Flüssigkristalle (101) und anisotrope Farbstoffe (102) enthält,
einen ersten reflektierenden polarisierenden Film (20) mit einer ersten Reflexionsachse (R1), die in einer Richtung ausgebildet ist,
eine zweite Flüssigkristallzelle mit einer verzögerungsvariablen Flüssigkristallschicht (30), die zwischen einem Phasendifferenzmodus, in dem eine Schwingungsrichtung von linear polarisiertem Licht um 90 Grad gedreht ist, und einem Nicht-Phasendifferenzmodus umschaltet,
einen zweiten reflektierenden polarisierenden Film (40) mit einer zweiten Reflexionsachse (R2) parallel zu der ersten Reflexionsachse (R1); und
eine absorbierende Platte (50) mit einem Lichtabsorptionsvermögen von etwa 90% oder mehr in einem Wellenlängenbereich von 380 nm bis 780 nm,
wobei der reflexionsvariable Spiegel kein Bildanzeigefeld aufweist,
wobei der reflexionsvariable Spiegel zwischen einem Spiegelmodus und einem Antireflexionsmodus umschaltet, in dem das Lichtreflexionsvermögen 10% oder weniger beträgt, abhängig davon, ob eine Spannung angelegt ist oder nicht,
wobei der reflexionsvariable Spiegel den Spiegelmodus realisiert, wenn die erste Flüssigkristallzelle in einem vertikal orientierten Zustand ist und die zweite Flüssigkristallzelle in dem Phasendifferenzmodus in einem Zustand ist, in dem keine Spannung an der ersten Flüssigkristallzelle und an der zweiten Flüssigkristallzelle angelegt ist,
wobei der reflexionsvariable Spiegel den Antireflexionsmodus ausführt, wenn die erste Flüssigkristallzelle in einem horizontal orientierten Zustand ist und die zweite Flüssigkristallzelle in dem Nicht-Phasendifferenzmodus in einem Zustand ist, in dem eine Spannung an der ersten Flüssigkristallzelle und an der zweiten Flüssigkristallzelle angelegt ist,
wobei ein Gehalt des anisotropen Farbstoffs (102) in der Gast-Host-Flüssigkristallschicht (10) 0,1 Gew.-% oder mehr und 1,5 Gew.-% oder weniger beträgt,
wobei eine Reflexionsdifferenz zwischen dem Spiegelmodus und dem Antireflexionsmodus des reflexionsvariablen Spiegels 50% oder mehr beträgt.

2. Reflexionsvariabler Spiegel nach Anspruch 1,
wobei die erste Flüssigkristallzelle ferner einen ersten Ausrichtungsfilm und einen zweiten Ausrichtungsfilm (11A, 11B) aufweist, die beiden Seiten der Gast-Host-Flüssigkristallschicht gegenüberliegend angeordnet sind.

3. Reflexionsvariabler Spiegel nach Anspruch 1,
wobei die erste Flüssigkristallzelle ferner ein erstes transparentes Elektrodensubstrat und ein zweites transparentes Elektrodensubstrat (12A, 12B) aufweist, die beiden Seiten der Gast-Host-Flüssigkristallschicht (10) gegenüberliegend angeordnet sind.

4. Reflexionsvariabler Spiegel nach Anspruch 1,
wobei der erste reflektierende polarisierende Film (20) eine erste Transmissionsachse orthogonal zu der ersten Reflexionsachse (R1) aufweist, und die erste Reflexionsachse (R1) und die erste Transmissionsachse in einer Ebenenrichtung ausgebildet sind.

5. Reflexionsvariabler Spiegel nach Anspruch 1,
wobei die erste Reflexionsachse (R1) des ersten reflektierenden polarisierenden Films (20) parallel zu einer Absorptionsachsenrichtung der anisotropen Farbstoffe im Antireflexionsmodus ist, wobei die Gast-Host-Flüssigkristallschicht (10) in einer horizontalen Orientierung ist.

6. Reflexionsvariabler Spiegel nach Anspruch 1,
wobei die zweite Flüssigkristallzelle ferner einen dritten Ausrichtungsfilm und einen vierten Ausrichtungsfilm (31A, 31B) aufweist, die beiden Seiten der verzögerungsvariablen Flüssigkristallschicht (30) gegenüberliegend angeordnet sind.

7. Reflexionsvariabler Spiegel nach Anspruch 1,
wobei die zweite Flüssigkristallzelle ferner ein drittes transparentes Elektrodensubstrat und ein viertes transparentes Elektrodensubstrat (32A, 32B) aufweist, die beiden Seiten der verzögerungsvariablen Flüssigkristallschicht (30) gegenüberliegend angeordnet sind.

8. Reflexionsvariabler Spiegel nach Anspruch 1,
wobei die zweite Flüssigkristallzelle eine 90-Grad-TN-Modus-Flüssigkristallzelle, eine 270-Grad-STN-Modus-Flüssigkristallzelle, eine ECB-Modus-Flüssigkristallzelle oder ein Laminat aus einer 1/2-Wellenplatte und einer VA-Modus-Flüssigkristallzelle ist.

9. Reflexionsvariabler Spiegel nach Anspruch 1,
wobei der zweite reflektierende polarisierende Film (40) eine zweite Transmissionsachse orthogonal zu der zweiten Reflexionsachse (R2) aufweist, und die zweite Reflexionsachse (R2) und die zweite Transmissionsachse in einer Ebenenrichtung ausgebildet sind.

10. Reflexionsvariabler Spiegel nach Anspruch 1,
wobei in dem Spiegelmodus die zweite Reflexionsachse (R2) des zweiten reflektierenden polarisierenden Films (40) parallel zu der Schwingungsrichtung des linear polarisierten Lichts ist, nachdem es die verzögerungsvariable Flüssigkristallschicht (30) in dem Phasendifferenzmodus durchlaufen hat.

## Revendications

1. Miroir à réflectivité variable comprenant, dans l'ordre suivant :
une première cellule à cristaux liquides ayant une couche de cristaux liquides hôte-invité (10) incluant des cristaux liquides (101) et des colorants anisotropes (102),
un premier film polarisant réfléchissant (20) ayant un premier axe de réflexion (R1) formé dans une direction,
une deuxième cellule à cristaux liquides ayant une couche de cristaux liquides à retard variable (30) commutant entre un mode de déphasage, dans lequel une direction de vibration de la lumière polarisée linéairement est tournée de 90 degrés, et un mode de non déphasage,
un deuxième film polarisant réfléchissant (40) ayant un deuxième axe de réflexion (R2) parallèle au premier axe de réflexion (R1) ; et
une plaque absorbante (50) ayant une absorptivité de lumière environ égale ou supérieure à 90 % dans une plage de longueur d'onde de 380 nm à 780 nm,
dans lequel le miroir à réflectivité variable ne comprend pas de panneau d'affichage d'image,
dans lequel le miroir à réflectivité variable commute entre un mode miroir et un mode anti-réflexion, dans lequel la réflectivité de la lumière est égale ou inférieure à 10 %, selon qu'une tension est appliquée ou non,
dans lequel le miroir à réflectivité variable réalise le mode miroir quand la première cellule à cristaux liquides est dans un état orienté à la verticale et la deuxième cellule à cristaux liquides est dans le mode de déphasage dans un état de non application de tension à chacune de la première cellule à cristaux liquides et de la deuxième cellule à cristaux liquides,
dans lequel le miroir à réflectivité variable réalise le mode anti-réflexion quand la première cellule à cristaux liquides est dans un état orienté à l'horizontale et la deuxième cellule à cristaux liquides est dans le mode de non déphasage dans un état d'application de tension à chacune de la première cellule à cristaux liquides et de la deuxième cellule à cristaux liquides,
dans lequel une teneur en colorant anisotrope (102) dans la couche de cristaux liquides hôte-invité (10) est égale ou supérieure à 0,1 % en poids et égale ou inférieure à 1,5 % en poids,
dans lequel une différence de réflectivité entre le mode miroir et le mode anti-réflexion du miroir à réflectivité variable est égale ou supérieure à 50 %.

2. Miroir à réflectivité variable selon la revendication 1,
dans lequel la première cellule à cristaux liquides comprend en outre des premier et deuxième films d'alignement (11A, 11B) disposés opposés aux deux côtés de la couche de cristaux liquides hôte-invité.

3. Miroir à réflectivité variable selon la revendication 1,
dans lequel la première cellule à cristaux liquides comprend en outre des premier et deuxième substrats d'électrode transparents (12A, 12B) disposés opposés aux deux côtés de la couche de cristaux liquides hôte-invité (10).

4. Miroir à réflectivité variable selon la revendication 1,
dans lequel le premier film polarisant réfléchissant (20) a un premier axe de transmission orthogonal au premier axe de réflexion (R1), et le premier axe de réflexion (R1) et le premier axe de transmission sont formés dans une direction dans le plan.

5. Miroir à réflectivité variable selon la revendication 1,
dans lequel le premier axe de réflexion (R1) du premier film polarisant réfléchissant (20) est parallèle à une direction d'axe d'absorption des colorants anisotropes dans le mode anti-réflexion, avec la couche de cristaux liquides hôte-invité (10) qui est dans une orientation horizontale.

6. Miroir à réflectivité variable selon la revendication 1,
dans lequel la deuxième cellule à cristaux liquides comprend en outre des troisième et quatrième films d'alignement (31A, 31B) disposés opposés aux deux côtés de la couche de cristaux liquides à retard variable (30).

7. Miroir à réflectivité variable selon la revendication 1,
dans lequel la deuxième cellule à cristaux liquides comprend en outre des troisième et quatrième substrats d'électrode transparents (32A, 32B) disposés opposés aux deux côtés de la couche de cristaux liquides à retard variable (30).

8. Miroir à réflectivité variable selon la revendication 1,
dans lequel la deuxième cellule à cristaux liquides est une cellule à cristaux liquides en mode TN 90 degrés, une cellule à cristaux liquides en mode STN 270 degrés, une cellule à cristaux liquides en mode ECB ou un stratifié d'une plaque 1/2 onde et d'une cellule à cristaux liquides en mode VA.

9. Miroir à réflectivité variable selon la revendication 1,
dans lequel le deuxième film polarisant réfléchissant (40) a un deuxième axe de transmission orthogonal au deuxième axe de réflexion (R2), et le deuxième axe de réflexion (R2) et le deuxième axe de transmission sont formés dans une direction dans le plan.

10. Miroir à réflectivité variable selon la revendication 1,
dans lequel, dans le mode miroir, le deuxième axe de réflexion (R2) du deuxième film polarisant réfléchissant (40) est parallèle à la direction de vibration de la lumière polarisée linéairement après être passé à travers la couche de cristaux liquides à retard variable (30) dans le mode de déphasage.
